# EUROPÄISCHE PATENTANMELDUNG

(11) **EP 0 666 243 A1**
(43) Veröffentlichungstag der Anmeldung: **09.08.1995**
(21) Anmeldenummer: 95101647.6
(22) Anmeldetag: 07.02.1995
(51) Int. Cl.: C03C 25/02

(54) **Glasfaserbündel sowie Verfahren und Vorrichtung zu dessen Herstellung**

(30) Priorität: 08.02.1994 DE 4403915; 11.02.1994 DE 4404430
(71) Anmelder: ROBLON A/S, DK-9900 Frederikshavn (DK)
(72) Erfinder: Olesen, John Erik, DK-9900 Frederikshavn (DK); Jorgensen, Jorgen Horby, DK-9900 Frederikshavn (DK)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Ein Glasfaserbündel, das insbesondere als Stützkörper für ein optisches Wellenleiterkabel dient, zeichnet sich dadurch aus, daß die Oberflächen der Glasfaser mit einem Wasser absorbierenden Mittel behaftet sind. Bei Kontakt mit Wasser schwillt das Mittel auf und verhindert ein durch Kapillarwirkung bedingtes Aufsteigen des Wassers entlang des Stützkörpers. Das absorbierende Mittel wird vorzugsweise dadurch auf die Glasfasern des Bündels aufgebracht, daß das Bündel durch ein Bad einer Emulsion des absorbierenden Mittels und eine Flüssigkeit gezogen und die Flüssigkeit anschließend in einem Trocknungsofen verdampft wird.

## Beschreibung

Die Erfindung betrifft allgemein ein Glasfaserbündel und insbesondere ein Verfahren zum Imprägnieren von Glasfaserbündein sowie eine Vorrichtung zur Ausführung des Verfahrens.

Glaserfaserbündel finden heute u.a. Verwendung als Stützkörper in optischen Wellenleiterkabeln, die in der Regel zur Nachrichtenübertragung über große Distanzen eingesetzt werden.

Die Glasfilamente, die in solchen optischen Wellenleiterkabeln für die optische Nachrichtenübertragung verwendet werden, sind an sich sehr empfindlich. Bereits geringfügige Dehnungs- und Biegebeanspruchungen können zu Brüchen der Glasfilamente führen. Aus diesem Grund werden die der Nachrichtenübertragung dienenden Glasfilamente normalerweise zum Auffangen dieser Belastungen abgestützt.

So ist es beispielsweise bekannt, die Glasfilamtente eines optischen Leiters in einem dünnen Rohr oder einer Kanüle anzuordnen, die mit einem Petrolatum gefüllt ist. Dabei haben die Glasfilamente eine Länge, die größer ist als die des Rohres, so daß sie in diesem ohne Spannung leicht wellenförmig liegen. Auf diese Weise führen Dehnungen und Biegungen, die beispielsweise aufgrund von Zugspannungen oder Temperaturschwankugen auftreten und innerhalb gewisser Grenzen liegen, nicht zu Belastungen des Glasfaserbündels, sondern werden allein durch die Hülle aufgefangen.

In der Praxis werden mehrere solcher Hüllen um einen Stützkörper der eingangs genannten Art herum angeordnet, der Druck- und Zugspannungen aufnehmen kann. Druckspannungen, die in erster Linie aufgrund von Temperaturschwankungen auftreten, sind insofern problematisch, als die Hüllen sich stärker zusammenziehen als die Glasfilamente, so daß diese innerhalb der Hüllen eine noch stärkere Wellenform als ursprünglich annehmen und dabei die Innenwände der Hüllen zumindest stellenweise berühren, was zu Beeinträchtigungen in der Signalübertragung führen kann.

Der Einsatz der zuvor erläuterten bekannten Glasfaserbündel als Stützkörper wird dann problematisch, wenn diese mit Wasser in Berührung kommen können. Denn die einzelnen Fasern des Glasfaserbündels des Stützkörpers liegen nicht vollständig aneinander an und bilden unabhängig davon, ob die einzelnen Glasfasern verdrillt oder parallel zueinander angeordnet sind, Zwischenräume zwischen sich, die eine sehr kleine Querschnittsfläche aber bei endlosen Fasern eine große Länge besitzen und somit Kapillare bilden.

Wenn nun ein Glasfaserbündel mit Wasser in Kontakt kommt, kann in den Zwischenräumen aufgrund der Kapillarwirkung das Wasser aufsteigen und auf diese Weise möglicherweise in ein elektrisches Gerät gelangen, das durch die Feuchtigkeit Beschädigungen davontragen kann.

Aufgabe der vorliegenden Erfindung ist es, die bekannten Glasfaserbündel so auszubilden, daß ihre Kapillarwirkung verringert wird. Außerdem soll ein Verfahren zur Herstellung solcher Glasfaserbündel sowie eine Vorrichtung zur Durchführung des Verfahrens angegeben werden.

Die Aufgabe ist erfindungsgemäß dadurch gelöst, daß die Glasfasern eines Glasfaserbündels an ihrer Außenfläche mit einem Wasser absorbierenden Mittel behaftet sind. Durch das Wasser absorbierende Mittel kann Feuchtigkeit, die in das Glasfaserbündel gelangt, gebunden und dadurch ein Aufsteigen aufgrund der Kapillarwirkung der Zwischenräume zwischen den einzelnen Glasfasern verhindert werden. Dieser Effekt wird dadurch verstärkt werden, daß die gebundene Feuchtigkeit die Kapillare verengt, beispielsweise dadurch, daß das Absorptionsmittel bei Kontakt mit Wasser aufschwillt und einen größeres Raumvolumen annimmt.

Solche Glasfaserbündel können hergestellt werden, indem zunächst ein Glasfaserbündel aus einzelnen Glasfasern, vor allem aus sehr langen, quasi endlosen, Glasfilamenten gebildet wird, das Glasfaserbündel vorzugsweise in dessen Längsrichtung durch ein Imprägnierbad, bestehend aus einer Emulsion eines wasserabsorbierenden Mittels und einer Flüssigkeit oder evtl. eines Lösungsmittels, geführt wird und anschliessend die Flüssigkeit bzw. das Lösungsmittel verdampft wird.

Beim Durchlaufen des Imprägnierbades wird das Glasfaserbündel mit der Emulsion, die das Absorptionsmittel beinhaltet, benetzt. Anschließend wird die Flüssigkeit bzw. das Lösungsmittel beispielsweise in einem Ofen verdampft, so daß nur noch das Absorptionsmittel an den Glasfasern hängenbleibt.

Es hat sich gezeigt, daß die Benetzung des Glasfaserbündels durch die Emulsion erhöht werden kann, wenn das Glasfaserbündel in abgeflachter Form durch das Imprägnierbad geführt wird.

Als Flüssigkeit bzw. Lösungsmittel kann zweckmäßigerweise Öl verwendet werden, mit dem sich das Glasfaserbündel sehr gut benetzen läßt. In bevorzugter Weise wird Lampenöl als Flüssigkeit verwendet.

Die Menge von Absorptionsmittel, die an dem Glasfaserbündel anhaftet, kann reguliert werden, indem die Menge von Absorptionsmittel in der Emulsion variiert wird. Das Absorptionsmittel ist vorzugsweise Polynatriumacrylat, insbesondere in Pulverform.

Außerdem kann durch geeignete Auswahl der Düse, mit der das Absorptionsmittel in die Flüssigkeit zur Bildung der Emulsion eingespritzt wird, d. h. durch Variierung der Tröpfchengröße des Absorptionsmittels, die Menge von Absorptionsmittel, die an den Glasfaserbündeln haften bleibt bzw. dessen Verteilung auf die Oberfläche der Glasfasern, beeinflußt werden. Je kleiner die Teilchengröße ist, desto leichter haften die Teilchen an den einzelnen Glasfasern an.

Zu einer Vorrichtung zur Durchführung des zuvor erläuterten Verfahrens gehören gemäß der Erfindung eine Fördereinrichtung zur Förderung eines beispielsweise von einer Zuführrolle kommenden Glasfaserbündels, ein Imprägnierbad, das eine Emulsion aus einem Wasser absorbierenden Mittel und einer Flüssigkeit oder einem Lösungsmittel enthält, und eine Trocknungseinrichtung, in der die Flüssigkeit bzw. das Lösungsmittel verdampft wird.

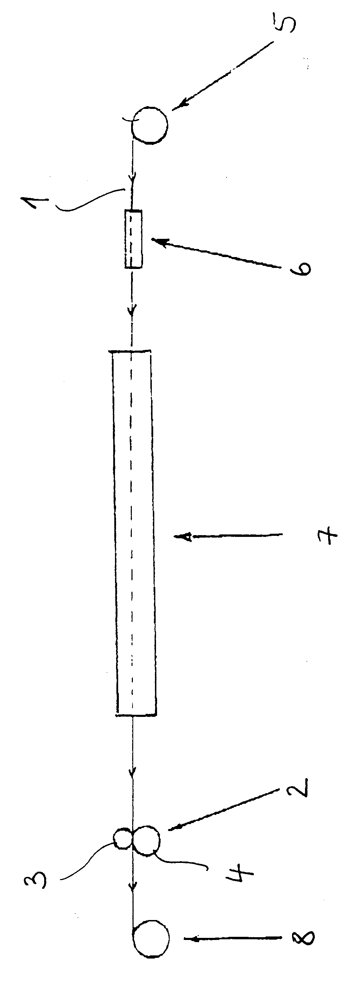

In der einzigen Figur ist eine Prinzipskizze des Verfahrens zur Imprägnierung von Glasfasern dargestellt.

Vorbereitete Glasfaserbündel 1 werden mit einer Fördereinrichtung 2, die von zwei Förderwalzen 3, 4 gebildet wird, von einer Zuführrolle 5 abgewickelt und einem Imprägnierbad 6 zugeführt, welches mit einer Emulsion aus einer Flüssigkeit, vorzugsweise Öl (insbesondere Lampenöl), und einem wasserabsorbierenden Mittel, insbesondere Polynatriumacrylat in Pulverform, gefüllt ist.

Die Emulsion wurde zuvor hergestellt, indem das Absorptionsmittel über eine Düse zerstäubt und in die Flüssigkeit eingespritzt wurde.

Von dem Imprägnierbad 6 wird das mit der Emulsion benetzte Glasfaserbündel einem Trockenofen 7 zugeführt, in dem die Flüssigkeit verdampft wird, so daß nur noch das Wasser absorbierende Mittel an den Glasfasern des Glasfaserbündels 1 haften bleibt.

Das so imprägnierte Glasfaserbündel 1 wird anschließend auf einer Rolle 8 aufgewickelt.

## Patentansprüche

1. Glasfaserbündel mit einer Vielzahl von endlosen Glasfasern,
dadurch **gekennzeichnet**,
daß die Oberflächen der Glasfasern mit einem Wasser absorbierenden Mittel behaftet sind.

2. Verfahren zum Imprägnieren von Glasfaserbündeln mit den Schritten
a) Bildung eines Glasfaserbündels aus einzelnen Glasfasern,
b) Führen des Glasfaserbündels vorzugsweise in dessen Längsrichtung durch ein Imprägnierbad bestehend aus einer Emulsion eines Wasser absorbierenden Mittels und einer Flüssigkeit bzw. eines Lösungsmittel, und
c) Verdampfen der Flüssigkeit bzw. des Lösungsmittels.

3. Verfahren nach Anspruch 2,
dadurch **gekennzeichnet**,
daß die Flüssigkeit Öl, insbesondere Lampenöl ist.

4. Verfahren nach Anspruch 2,
dadurch **gekennzeichnet**,
daß das Absorptionsmittel Polynatriumacrylat ist.

5. Verfahren nach einem der Ansprüche 2 bis 4,
dadurch **gekennzeichnet**, daß
die Menge von Absorptionsmittel durch die Emulsionsmischung reguliert wird.

6. Verfahren nach einem der Ansprüche 2 bis 5,
dadurch **gekennzeichnet**,
daß die Menge von Absorptionsmittel durch die Wahl der Düsengröße, mit der das Absorptionsmittel in die Flüssigkeit eingespritzt wird, reguliert wird.

7. Verfahren nach einem der Ansprüche 2 bis 6,
dadurch **gekennzeichnet**,
daß das Glasfaserbündel in abgeflachter Form durch das Imprägnierbad geführt wird.

8. Vorrichtung zum Imprägnieren eines Glasfaserbündels mit einer Fördereinrichtung (2) zur Förderung eines beispielsweise von einer Zuführrolle (5) kommenden Glasfaserbündels (1), einem Imprägnierbad (6), das eine Emulsion aus einem Wasser absorbierenden Mittel und einer Flüssigkeit bzw. einem Lösungsmittel enthält, und einer Trocknungseinrichtung (7), in der die Flüssigkeit bzw. das Lösungsmittel verdampft wird.
